# EUROPEAN PATENT APPLICATION

(11) **EP 1 302 445 A2**
(43) Date of publication of application: **16.04.2003**
(21) Application number: 02015179.1
(22) Date of filing: 08.07.2002
(51) Int. Cl.: C02F 1/461

(54) **Device and process for oxygenating an aqueous solution by electrolysis**

(30) Priority: 09.07.2001 IT MI20011453
(71) Applicant: Guerini, Arturo, 2530 Coccaglio (BS) (IT)
(72) Inventor: Guerini, Arturo, 2530 Coccaglio (BS) (IT)
(74) Representative: Premru, Rok

(57) **Abstract**

The present invention concerns a device for oxygenating an aqueous solution by electrolysis (1) comprising an anode (A), a cathode (K) that can be inserted into an aqueous solution and that can be connected electrically to an electric-power supply (2) for supplying said anode (A) and said cathode (K) with a d.c. voltage, said device being characterized in that there are provided means designed for maintaining the ionic current between the anode (A) and the cathode (K) substantially constant, or within a predetermined range, as the conductivity of the aqueous solution varies, by modifying the amount of the surface of the anode and/or surface of the cathode used for the process of electrolysis.

## Description

The subject of the present invention is a device for the oxygenation of aqueous solutions by electrolysis, and a process for oxygenating aqueous solutions by electrolysis.

The oxygenation of aqueous solutions by electrolysis finds application in a wide range of industrial processes: for example, in the treatment of solutions for offset-printing baths and in the treatment of decolourizing discharge waters coming from plants for the dyeing of fabrics.

In the above treatments, the concentration of oxygen in the aqueous solution must be kept within pre-set values. Consequently, also the amount of oxygen produced must remain within pre-set values.

However, on account of the progressive contamination to which the above aqueous solutions are subject, the electrical conductivity of the bath solution tends to increase over time, and therewith the production of oxygen. Consequently, the concentration of oxygen tends to rise beyond the desired limits.

In order to maintain the production of oxygen constant, or in any case within a certain range as the conductivity of the aqueous solution varies, a known solution is to use current-stabilized power supplies, which as the conductivity of the electrolyte increases, automatically reduce the supply voltage, so as to maintain the electric current delivered and, hence the amount of oxygen produced, constant over time.

Current-stabilized power supplies are, however, rather cumbersome and very costly.

On the other hand, the reduction in the supply voltage on the electrodes can be made only up to a certain value - typically 12-15 V. Below this value the anodic efficiency drops drastically and, together with this, the production of oxygen.

Consequently, once the supply voltage reaches said lower threshold, the aqueous solution can no longer be oxygenated.

A further drawback that is encountered in electrolytic cells is the formation of deposits of dirt on the cathode, with consequent reduction in the electrolytic efficiency of the cell, accompanied by the risk of short-circuits between the anode and the cathode.

The purpose of the present invention is to solve the problems posed by the known art and, in particular, the problems listed above.

According to the invention, the above purposes are achieved by means of an electrolysis device in accordance with Claim 1 and by means of a process of oxygenation by electrolysis in accordance with what is specified in Claim 10.

Further advantages can be obtained with the supplementary characteristics of the dependent claims.

A possible embodiment of the invention, in accordance with the claims, will now be described with reference to the attached drawings, in which:
- Figure 1 is a partially cross-sectional front view of an electrolysis device according to a first embodiment, in a first operating condition;
- Figure 2 is the same view as the one illustrated in Figure 1 and shows the electrolysis device in a second operating condition;
- Figure 3 is a partially cross-sectional side view of the device of Figure 1;
- Figure 4 is a partially cross-sectional front view of a second embodiment of the electrolysis device, in a first operating condition;
- Figure 5 is the same view as the one illustrated in Figure 4 and shows the electrolysis device in a second operating condition;
- Figure 6 is the same view as the one illustrated in Figure 4 and shows the electrolysis device during the periodic operation of cleaning of the cathode; and
- Figure 7 is a partially cross-sectional front view of the same device as the one illustrated in Figure 4.

With reference to the tables of drawings, number 1 designates, as a whole, an electrolysis device comprising an anode A and a cathode K, and a power supply 2 for supplying said anode A and said cathode K with a voltage that remains constant in time.

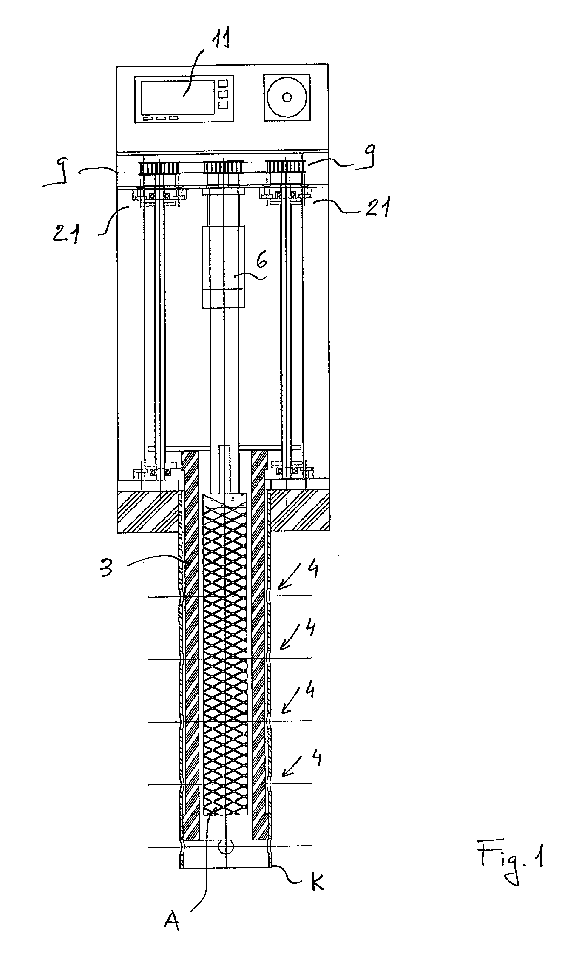

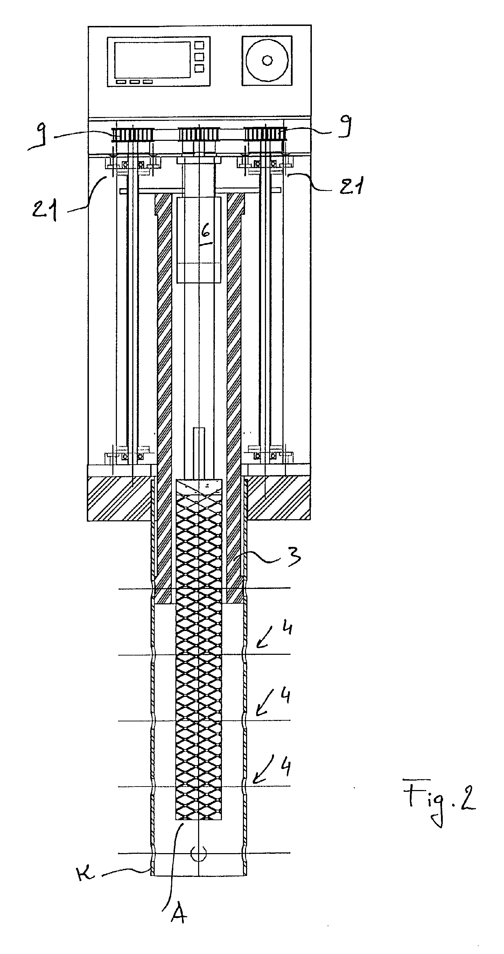

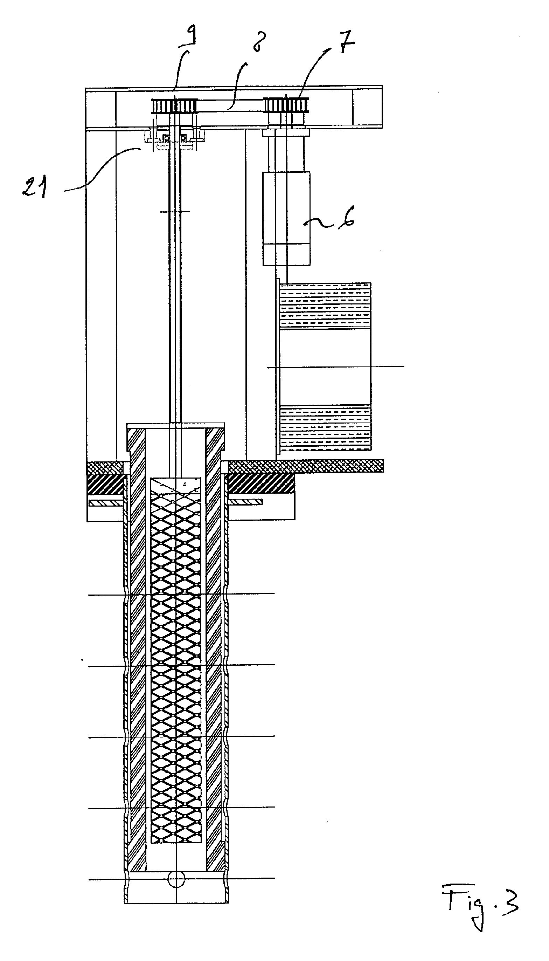

In the embodiment illustrated in Figures 1 to 3, the power supply is assembled together with the remaining part of the device. Alternatively, the power supply may be separate from the rest of the device.

The cathode may be made of stainless steel, whilst the anode may be of the DSA (Dimensional Stable Anode) type, for example an anode made of platinum-plated titanium or titanium coated with deposits of mixed oxides.

A characteristic of the electrolysis device lies in the fact that there are provided means designed to maintain the ionic current between the anode A and the cathode K substantially constant or within a pre-set range as the conductivity of the aqueous solution varies, by modifying the amount of surface of the anode and/or cathode used for the process of electrolysis.

A person skilled in the branch will understand that, thanks to the above characteristic, it is possible to use even non-stabilized electric-power supplies, hence ones of low cost and of modest overall dimensions.

A person skilled in the branch will moreover appreciate the fact that, thanks to the above characteristic, it is possible to work at a voltage that remains constant over time, so that the aqueous solution can be used for a longer period before having to be replaced.

According to the embodiment illustrated in the drawings of Figures 1 to 3, the ionic current is kept substantially constant, or in any case within a pre-set range, as the conductivity of the aqueous solution varies, by means of a shield 3 made of electrically non-conductive material (for example nylon), which can be gradually extracted from/inserted between the anode A and the cathode K, so as to vary the amount of the surface of the anode and cathode facing one another, i.e., the surfaces of the anode and cathode effectively used for the process of electrolysis.

Preferably the cathode K and the anode A have a substantially tubular shape, and the anode A is set coaxially inside the cathode K.

Advantageously, the shield 3, which is also of a tubular shape, is able to scrape the internal surface of the cathode K during movement upwards/downwards so as to remove any dirt and/or encrustations that may form on the surface of the cathode, thus minimizing maintenance operations.

Preferably, the cathode K is provided with a plurality of radial openings 4 distributed throughout its height. This characteristic enables use of the device simply by immersing the anode A and the cathode K partially in a pre-existing tank, without having to modify the already existing hydraulic circuit.

The cathode K may be coated, on the outside, with an electrically insulating material so as to prevent electrical interference with the tank in which the device is inserted.

According to the embodiment illustrated in Figures 1 to 3, movement of the tubular shield 3 is obtained by means of a d.c. motor 6 and a transmission system, which comprises a drive pulley 7, a cogged belt 8, two driven pulleys 9 and two internal-thread-external-thread screw-driven systems 21 for converting the rotational movement of the driven pulleys 9 into linear movements.

Advantageously, control of the electric motor 6, which causes movement of the tubular shield 3, can be obtained by means of a relay-type non-linear controller 11, for example a digital amperometer 11 equipped with an internal-relay switch, which controls starting and stopping of the motor 6.

The digital amperometer 11 is provided with two trimmers (not shown) for setting the minimum current value and the maximum current value between the electrodes A and K.

Any person skilled in the branch will appreciate the technical simplicity, as well as the low cost, of the solution described above.

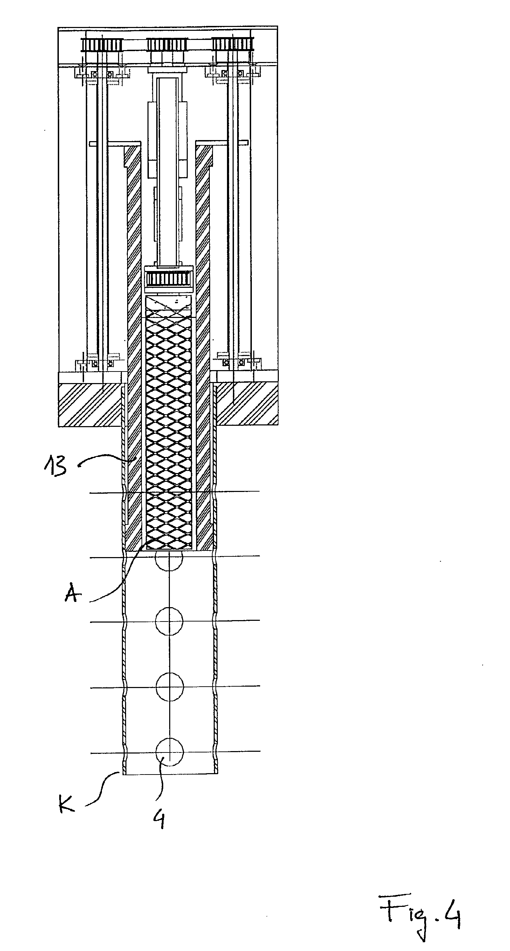

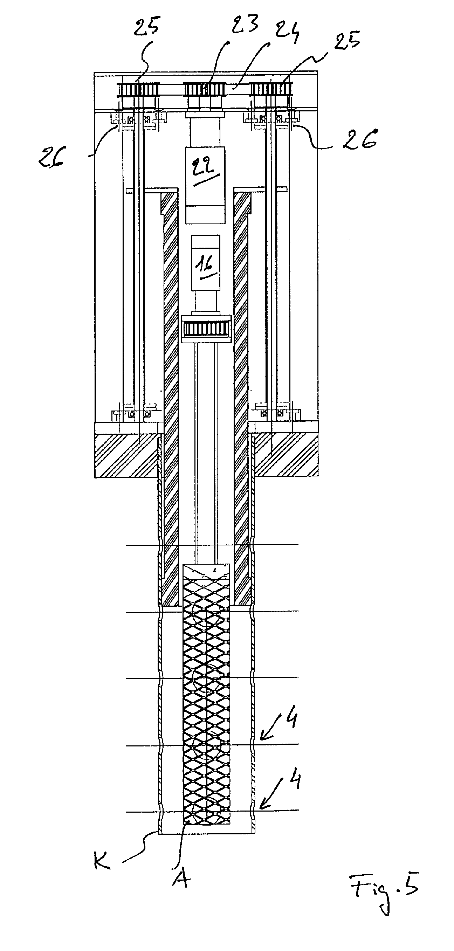

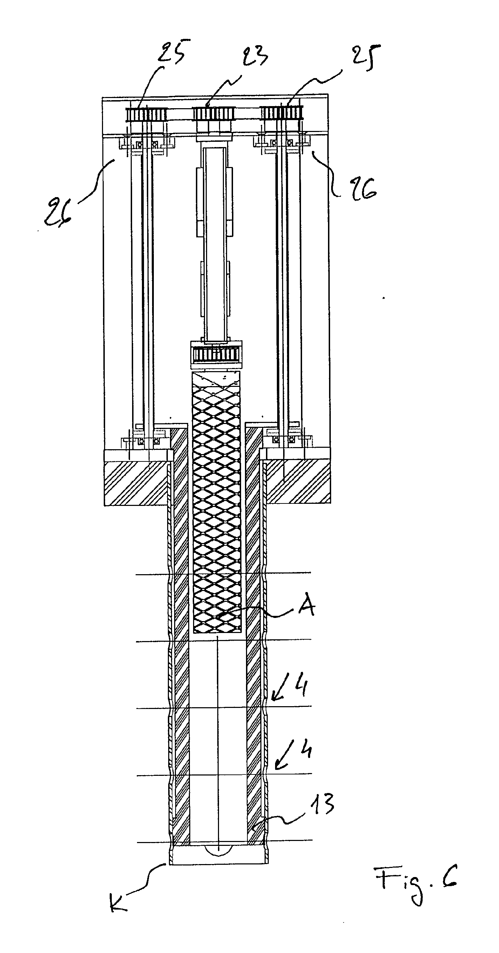

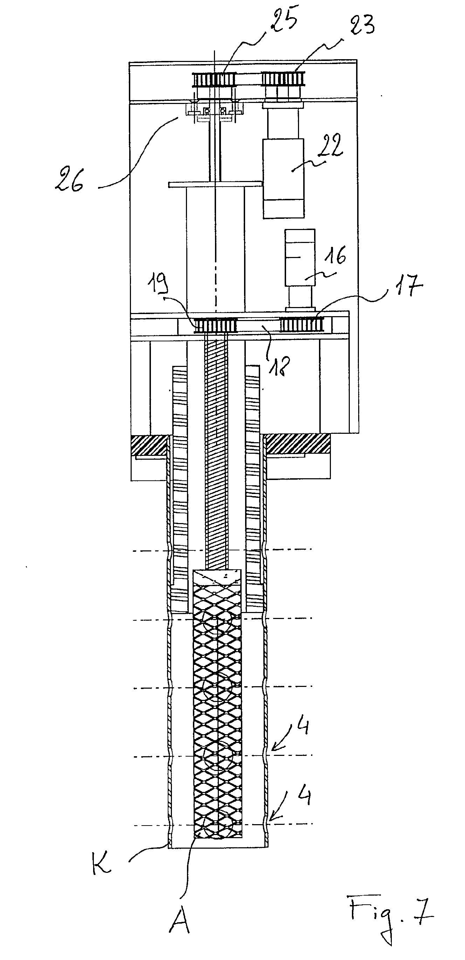

According to an alternative embodiment (illustrated in Figures 4 to 7), the current between the electrodes A and K can be kept substantially constant (or in any case within a pre-set range), as the conductivity of the aqueous solution varies, by using an anode A which can move parallel to the cathode K, so as to vary the amount of the surface of the anode immersed in the aqueous solution and hence facing the surface of the cathode.

The above solution is of particular interest because, when the bottom end of the anode A is consumed, the device automatically increases the depth of immersion of the anode A in order to exploit the top part of the anode A.

As compared with the embodiment illustrated in Figures 1 to 3, the embodiment of Figures 4 to 7 thus presents the advantage of requiring even less frequent maintenance.

The embodiment of Figures 4 to 7 moreover has a scraping element 13, which is of a substantially tubular shape in the example illustrated and which cyclically (for example once a day) performs a complete stroke along the surface of the cathode K facing the surface of the anode A, with the sole purpose of scraping the said surface.

In this second embodiment, movement of the anode A is controlled by means of a d.c. motor 16 and a transmission system, which comprises a drive pulley 17, a cogged belt 18, a driven pulley 19 and an internal-thread-external-thread screw-driven linear-movement system 20.

To control cyclically the stroke of the scraper element 13, the device of Figures 4 to 7 also envisages a second d.c. motor 22, controlled by a specially designed timer, and a transmission system, which comprises a drive pulley 23, a cogged belt 24, two driven pulleys 25 and two internal-thread-external-thread screw-driven linear-movement systems 26.

According to a further possible embodiment (not shown), it is possible to move the cathode K in a direction parallel to the anode A, so as to vary the amount of surface of the cathode immersed in the aqueous solution and facing the surface of the anode.

## Claims

1. A device for oxygenating an aqueous solution by electrolysis (1) comprising an anode (A), a cathode (K) that can be inserted into an aqueous solution and that can be connected electrically to an electric-power supply (2) for supplying said anode (A) and said cathode (K) with a d.c. voltage, said device being **characterized in that** there are provided means designed for maintaining the ionic current between the anode (A) and the cathode (K) substantially constant, or within a predetermined range, as the conductivity of the aqueous solution varies, by modifying the amount of the surface of the anode and/or surface of the cathode used for the process of electrolysis.

2. The electrolysis device (1), according to Claim 1, in which said means designed for maintaining the ionic current between the anode (A) and the cathode (K) substantially constant, or within a predetermined range, comprise a shield (3), made of electrically non-conductive material, that can be gradually extracted from/inserted between the anode (A) and the cathode (K) so as to vary the amount of surface of the anode and surface of the cathode facing one another.

3. The electrolysis device (1) according to Claim 1, in which said means designed for maintaining the ionic current substantially constant, or within a predetermined range, as the conductivity of the electrolyte varies comprise an anode (A) that is mobile with respect to the cathode (K) so as to vary the depth of immersion of the anode (A) and hence the amount of surface of the anode facing the surface of the cathode.

4. The electrolysis device, according to Claim 1, in which said means designed for maintaining the ionic current substantially constant as the conductivity of the electrolyte varies comprise a cathode (K) that is mobile with respect to the anode (A) so as to vary the depth of immersion of the cathode (K) and hence the amount of surface of the anode facing the surface of the cathode.

5. The electrolysis device (1) according to any one of Claims 2 to 4, in which the anode (A) is set coaxially inside the cathode (K).

6. The electrolysis device (1) according to Claim 5, in which the cathode is provided with a plurality of radial openings (4).

7. The electrolysis device (1) according to Claim 6, in which the cathode (K) is coated, on the outside, with an electrically insulating material.

8. The electrolysis device (1) according to any one of the preceding claims, in which the control of the movement of the shield (3) or of the anode (A) or of the cathode (K) is obtained by means of a d.c. electric motor (6) controlled by a relay-type non-linear controller.

9. The electrolysis device (1) according to one of Claims 5 to 8, in which the cathode (K) has a substantially tubular shape and in which said shield (3) is able to scrape the internal surface of the cathode (K), so as to remove any dirt and/or encrustations that may be present on the surface of the cathode.

10. The process for oxygenating an aqueous solution by electrolysis, in particular for the treatment of solutions for offset-printing baths, in which the anode (A) and the cathode (K) are supplied with a d.c. voltage of an effective value that remains constant in time, and in which the ionic current between anode (A) and cathode (K) is kept substantially constant, or within a pre-set value, as the conductivity of the electrolyte varies, by modifying the amount of the surface of the anode and/or surface of the cathode used for the process of electrolysis.

11. The process according to Claim 10, in which the control of the ionic current is obtained by extracting/inserting the anode (A) from/into the electrolyte.

12. The process according to Claim 10, in which the control of the ionic current is obtained by extracting/inserting the cathode (K) from/into the electrolyte.

13. The process according to Claim 10 or Claim 11, in which there is cyclically carried out scraping of the cathode (K) to remove any dirt and/or encrustations that may be present on the surface of the cathode.

14. The process according to Claim 11, in which control of the ionic current is obtained by inserting/extracting a shield (3) made of electrically non-conductive material between the anode (A) and the cathode (K).

15. The process according to Claim 12, in which said shield (3) slides on the surface of the cathode (K), so as to remove any dirt and/or encrustations that may present on the surface of the cathode.
